(19) Europäisches Patentamt
European Patent Office
Office européen des brevets

(11) **EP 2 613 986 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(21) Anmeldenummer: **11754664.8**

(22) Anmeldetag: **09.09.2011**

(51) Int Cl.:
**B60T 8/1755** (2006.01)    **B62D 15/02** (2006.01)

(86) Internationale Anmeldenummer:
**PCT/EP2011/065588**

(87) Internationale Veröffentlichungsnummer:
**WO 2012/032133 (15.03.2012 Gazette 2012/11)**

(54) **LENKWINKELBESTIMMUNG FÜR EIN KRAFTFAHRZEUG**

DETERMINATION OF STEERING ANGLE FOR A MOTOR VEHICLE

DÉTERMINATION DE L'ANGLE DE DIRECTION POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2011 DE 102011082364**
**09.09.2010 DE 102010040532**

(43) Veröffentlichungstag der Anmeldung:
**17.07.2013 Patentblatt 2013/29**

(73) Patentinhaber: **Continental Teves AG & Co. oHG 60488 Frankfurt (DE)**

(72) Erfinder:
• **KOUKES, Vladimir 64297 Darmstadt (DE)**
• **SCHMIDT, Robert 65779 Kelkheim (DE)**
• **NIEPELT, Mathias 61169 Friedberg (DE)**
• **FÜHRER, Jochen 64287 Darmstadt (DE)**
• **HERBST, Ralf 56355 Nastätten (DE)**

(56) Entgegenhaltungen:
**EP-A2- 1 627 799    WO-A2-2007/113332**

**Beschreibung**

Die Erfindung betrifft ein Verfahren gemäß Oberbegriff von Anspruch 1 und ein Steuergerät gemäß Oberbegriff von Anspruch 13.

Kostengünstige Sensoren für die Messung des Lenkradwinkels liefern relative Werte, die den Winkel des Lenkrads bezogen auf die Lenkradposition beim Starten der Zündung des Kraftfahrzeugs angeben. Unabhängig davon, ob beim Zündungsstart (also dem Beginn einer Fahrt) eine Mittelstellung des Lenkrads vorliegt, zeigt der Lenkradwinkelsensor anfangs einen Nullwert oder einen zufälligen Wert an. Im Allgemeinen weicht der gemessene Lenkradwinkel also um einen festen Winkel, d.h. eine Nullpunktsverschiebung bzw. einen Offset des Lenkrads beim Zündungsstart, von dem tatsächlichen Lenkwinkel ab, der bei einer Geradeausfahrt des Fahrzeugs, also einer Mittelstellung des Lenkrads Null Grad beträgt. Für die Sicherheit des Fahrzeuges ist eine genaue Kenntnis des tatsächlichen Lenkwinkels jedoch unerlässlich, da dieser eine wesentliche Messgröße für Fahrdynamikregelsysteme wie eine Giermomentenregelung (ESC) darstellt. Es ist also erforderlich, die Nullpunktsverschiebung des gemessenen Lenkradwinkels zu ermitteln und zu korrigieren.

Aus der DE 697 14 806 T2 (bzw. der korrespondierenden US 5,790,966) ist ein Verfahren zum Ermitteln der Stellung eines Lenkrades bekannt, bei dem die Mittelstellung des Lenkrades mit einem ersten vorgegebenen Algorithmus oder einem zweiten vorgegebenen Algorithmus geschätzt wird, je nachdem, ob ein berechneter Lenkradeinschlagwinkel innerhalb oder außerhalb eines bestimmten Intervalls liegt. Abhängig von dem verwendeten Algorithmus ergibt sich ein schnelleres oder langsameres Einpendeln auf einen Mittelstellungswert.

In der WO 2007/11332 ist ein Verfahren zum Ermitteln eines Werts eines definierten ersten Bezugspunkts eines Lenkwinkels beschrieben, der mittels einem inkrementell messenden Sensor eines Kraftfahrzeugs gemessen wird, bei dem Zwischenwerte des definierten Bezugspunkts in wenigstens zwei Detektionsmodulen unter Heranziehung wenigstens einer zweiten gemessenen Größe ermittelt werden, wobei jedes Detektionsmodul an die Bestimmung des Werts des definierten Bezugspunkts des Lenkwinkels in einer vorgegebenen Fahrsituation angepasst ist. Für jeden Zwischenwert wird eine Qualitätsstufe bestimmt, und es werden die Qualitätsstufen der in verschiedenen Detektionsmodulen ermittelten Zwischenwerte verglichen, wobei der Wert des definierten Bezugspunkts aus den ermittelten Zwischenwerten nach Maßgabe des Ergebnisses des Vergleichs der Qualitätsstufen bestimmt wird.

Die DE 10 2008 063 567 A1 offenbart ein Einschlagwinkelbestimmungssystem zur schnellen und genauen Bestimmung der Nullverschiebung eines gemessenen Lenkwinkels und damit einer schnellen und genauen Bestimmung des tatsächlichen Einschlag- oder Lenkwinkels eines Fahrzeugs. Aus einer gemessenen Gierrate wird ein berechneter Einschlagwinkel bestimmt und dessen zeitliche Ableitung berechnet. Weiterhin wird die zeitliche Ableitung des gemessenen Lenk- bzw. Einschlagwinkels ermittelt. Wenn die Abweichung zwischen der Ableitung des gemessenen Einschlagwinkels und der Ableitung des berechneten Einschlagwinkels eine erste Schwelle unterschreitet, erfolgt eine Korrektur des gemessenen Einschlagwinkels auf Basis des berechneten Einschlagwinkels, andernfalls werden die Messung und die darauffolgenden Berechnungen wiederholt. Da die Bestimmung des berechneten Einschlagwinkels auf dem bekannten einspurigen Modell eines Fahrzeugs basiert, ist sie nur unter bestimmten Bedingungen anwendbar, wie in M. Mitschke, Dynamik der Kraftfahrzeuge, Band C Fahrverhalten, Springer, 1990 beschrieben. In dem Einschlagwinkelbestimmungssystem ist es vorgesehen, die Güte der Korrektur anhand eines Vertrauensintervalls zu beschreiben. Es hat sich aber herausgestellt, dass dies nicht hinreichend zuverlässig anzeigt, ob die Korrektur gültig ist.

Es ist daher Aufgabe der vorliegenden Erfindung, ein Verfahren und ein System zur Lenkwinkelbestimmung anzugeben, welche schnell und zuverlässig eine Korrekturkonstante für einen gemessenen Lenkwinkel bestimmen und Informationen über die Gültigkeit der Korrekturkonstante liefern.

Diese Aufgabe wird durch das Verfahren gemäß Anspruch 1 und das Steuergerät gemäß Anspruch 13 gelöst.

Es wird also ein Verfahren bereitgestellt, bei dem der Lenkwinkel eines Kraftfahrzeugs bestimmt wird, wobei über ein Fahrzeugmodell ein theoretischer Lenkwinkel berechnet und mit einem Lenkwinkelsensor ein gemessener Lenkwinkel bestimmt sowie die Differenz zwischen gemessenem und theoretischem Lenkwinkel ermittelt wird, wobei zumindest ein Datensatz umfassend eine Anzahl von aufeinanderfolgenden Messwerten erfasst und aus dem Mittelwert der Differenzen zwischen theoretischem und gemessenem Lenkwinkel eine Korrekturkonstante für den gemessenen Lenkwinkel bestimmt wird. Erfindungsgemäß wird anhand der während der Erfassung des Datensatzes vorliegenden Fahrtbedingungen und einer Analyse des Datensatzes eine Vertrauensstufe berechnet, welche sich zwischen aufeinanderfolgenden Datensätzen inkrementell ändert.

Unter Lenkwinkel wird hierbei der Lenkradwinkel verstanden, der angibt, um welchen Winkel das Lenkrad gegenüber seiner Mittelstellung ausgelenkt ist. Als Einschlagwinkel wird der Winkel bezeichnet, unter dem die gelenkten Räder eines Fahrzeugs zu dessen Längsachse stehen. Einschlagwinkel $\delta$ und Lenkradwinkel $\lambda$ sind gemäß

$$\delta = \lambda / \mathrm{K}$$

miteinander verknüpft, wobei K die konstante Lenkübersetzung bezeichnet. Wenn im Folgenden also von Einschlagwinkel oder Lenkwinkel die Rede ist, können diese Begriffe synonym verwendet werden, da der Einschlagwinkel direkt aus dem Lenkwinkel berechnet werden kann, und umgekehrt. Daher ist es auch nicht wesentlich, ob Messdaten bezüglich des Lenkwinkels oder Messdaten bezüglich des Einschlagwinkels bereitgestellt werden.

Unter einer sich inkrementell ändernden Vertrauensstufe wird hierbei verstanden, dass sich diese iterativ ändert, wobei in Abhängigkeit von den während der Erfassung des Datensatzes vorliegenden Fahrtbedingungen und einer Analyse des Datensatzes die Vertrauensstufe um einen konstanten oder von weiteren Bedingungen abhängigen Wert inkrementiert oder dekrementiert wird.

Dadurch, dass eine Anzahl (N>=2) von aufeinanderfolgenden Messwerten ermittelt wird, ist das Verfahren robust gegenüber einzelnen fehlerhaften Messwerten (bzw. Tupel von gemessenem und theoretischem Lenkwinkel sowie ggfs. weiteren gespeicherten Daten). Weiterhin kann in einer Analyse des Datensatzes geprüft werden, ob z.B. eine besonders große Streuung auf nicht hinreichend stabile Fahrtbedingungen und/oder Messfehler hinweist. Indem die Fahrtbedingungen erfasst und betrachtet werden, kann auch ein systematischer Fehler ausgeschlossen werden, der durch für das verwendete Fahrzeugmodell, insbesondere das an sich bekannte Einspurmodell, ungeeignete Fahrzustände hervorgerufen wird. Eine inkrementelle Änderung der Vertrauensstufe, welche z.B. bei Vorliegen geeigneter Bedingungen um einen vorgegebenen Wert erhöht wird, ermöglicht eine vereinheitlichte Betrachtung statistischer Eigenschaften des jeweiligen Datensatzes und während der Erfassung vorliegender Messbedingungen. Weiterhin kann dadurch auf besonders einfache Weise eine mittelfristige Überwachung von Messbedingungen und statistischer Qualität der Datensätze erfolgen, womit eine besonders zuverlässige Korrekturkonstante erhalten werden kann.

Neben einer inkrementellen Betrachtung der Vertrauensstufe ist in einer vorteilhaften Ausführungsform auch eine Zwischenspeicherung einer gemittelten Korrekturkonstante möglich. Hierbei kann insbesondere auch eine gewichtete Mittelwertbildung erfolgen, wobei die Gewichte der einzelnen Korrekturkonstanten in Abhängigkeit von der während ihrer Bestimmung vorherrschenden Vertrauensstufe gewählt werden können.

Vorzugsweise wird aus dem gemessenen Lenkwinkel und der Korrekturkonstante ein korrigierter Lenkwinkel bestimmt und an andere Fahrzeugsysteme, insbesondere ein System zur Fahrdynamikregelung, weitergegeben, wenn die Vertrauensstufe einen ersten Schwellwert überschreitet. Hierbei wird der erste Schwellwert bevorzugt so gewählt, dass z.B. einem System zur Fahrdynamikregelung zum frühestmöglichen Zeitpunkt ein geeigneter Lenkwinkel zur Verfügung steht.

Zweckmäßigerweise wird die Ermittlung neuer Korrekturkonstanten für die Dauer eines Zündungslaufs beendet, wenn die Vertrauensstufe einen zweiten Schwellwert überschreitet. Im Laufe eines Zündungslaufs, also eines zusammenhängenden Zeitraums, während dem die Zündung des Fahrzeugs bzw. die Stromversorgung ohne Unterbrechung aktiviert war, kann sich die Korrekturkonstante nicht unbemerkt ändern. Sobald also ein hinreichend genauer Wert für die Korrekturkonstante vorliegt, kann im Sinne eines sparsamen Umgangs mit Ressourcen auf eine erneute Bestimmung verzichtet werden. Hierbei wird der zweite Schwellwert für die Vertrauensstufe so gewählt, dass Fahrtbedingungen und statistische Analyse für eine vorgegebene Anzahl von Datensätzen eine sinnvolle Auswertung zugelassen haben, d.h. eine verlässliche Korrekturkonstante erhalten wurde. Es ist vorteilhaft, wenn der zweite Schwellwert größer als der erste Schwellwert ist, da dann bereits ein zumindest grob korrigierter Lenkwinkel zur Verfügung steht, bevor die Ermittlung des Korrekturwerts vollständig beendet ist.

Bevorzugt werden in einer Analyse des Datensatzes eine Standardabweichung der ermittelten Differenzen und/oder ein Korrelationskoeffizient zwischen theoretischem Lenkwinkel und gemessenem Lenkwinkel berechnet. Hierbei werden eine empirische Standardabweichung der ermittelten Differenzen und/oder ein empirischer Korrelationskoeffizient berechnet, welche die bestmögliche Abschätzung der Standardabweichung und/oder des Korrelationskoeffizienten anhand eines Datensatzes ermöglichen. Eine statistische Analyse des Datensatzes ist einfach durchführbar und benötigt keine weiteren Daten, dennoch kann mit Hilfe von Standardabweichung und/oder Korrelationskoeffizient erkannt werden, ob der Datensatz grob fehlerhafte Werte enthält bzw. für eine Auswertung ungeeignet ist.

Besonders bevorzugt werden mögliche Fehler der Korrekturkonstanten durch ein Vertrauensintervall abgeschätzt, welches von der Standardabweichung der ermittelten Differenzen und vorzugsweise der Vertrauensstufe abhängt. Anhand der statistischen Streuung innerhalb eines Datensatzes kann ein Vertrauensintervall berechnet werden, um zumindest einen Wert für die statistische Unsicherheit der Korrekturkonstante anzugeben. Dadurch, dass ein vorzugsweise additiver Term des Fehlers in Abhängigkeit von der Vertrauensstufe gewählt wird, kann eine zusammenfassende Betrachtung sowohl statistischer als auch systematischer Fehler der Korrekturkonstante anhand eines Werts erfolgen.

Besonders bevorzugt wird aus einem Datensatz nur dann die Korrekturkonstante bestimmt, wenn das Vertrauensintervall einen dritten Schwellwert unterschreitet und/oder der Korrelationskoeffizient einen vierten Schwellwert überschreitet. Sofern das Vertrauensintervall einen dritten Schwellwert überschreitet und/oder der Korrelationskoeffizient einen vierten Schwellwert unterschreitet, ist davon auszugehen, dass es eine Anzahl von Messfehlern gegeben hat und/oder die Fahrtbedingungen nicht hinreichend stabil waren.

Besonders bevorzugt wird die Vertrauensstufe dann oder nur dann erhöht, wenn das Vertrauensintervall einen fünften Schwellwert unterschreitet und/oder der Korrelationskoeffizient einen sechsten Schwellwert überschreitet. Für die Beurteilung der Zuverlässigkeit ist es vorteilhaft, die Vertrauensstufe dann (hinreichende Bedingung) oder nur dann (notwendige Bedingung) zu erhöhen, wenn die statistische Analyse des Datensatzes eine geringe Streuung der Messdaten anzeigt.

Besonders bevorzugt werden mehrere Datensätze ermittelt und ausgewertet, und die Vertrauensstufe wird erhöht, wenn die Abweichungen zwischen den aus den einzelnen Datensätzen bestimmten Korrekturkonstanten und/oder berechneten Korrelationskoeffizienten und/oder zumindest von der Standardabweichung abhängigen Vertrauensintervallen einen siebten Schwellwert unterschreitet. Der Vergleich aufeinander folgender Datensätze ermöglicht eine langfristige und somit besonders empfindliche Aussage über die Zuverlässigkeit der Messung.

Es ist vorteilhaft, wenn Informationen zu einer oder mehrerer der folgenden Fahrtbedingungen, eine Geschwindigkeit des Fahrzeugs, eine Aktivität von Fahrstabilitätsregelungssystemen, eine Gierrate, eine Querbeschleunigung, eine zeitliche Änderung der Gierrate, eine longitudinale Fahrtrichtung, eine Neigung des Fahrzeugs, eine zeitliche Änderung des Lenkwinkels, für die Ermittlung der Vertrauensstufe ausgewertet werden. Diese Daten können z.B. von einem Fahrstabilitätsregelungssystem bereitgestellt werden, welches in zunehmendem Maße zur Serienausstattung moderner Fahrzeuge gehört. Somit kann die Gültigkeit des verwendeten Fahrzeugmodells direkt anhand der Fahrtbedingungen überprüft werden.

Es ist besonders vorteilhaft, wenn die Vertrauensstufe dann oder nur dann erhöht wird, sofern die Fahrtbedingungen einer stabilen Geradeaus- oder Kurvenfahrt ohne Eingriffe von Fahrstabilitätsregelungssystemen entsprechen. Da Fahrstabilitätsregelungen in instabilen Fahrsituationen eingreifen, welche zur Ermittlung von Korrekturkonstanten wenig geeignet sind, und darüber hinaus die ermittelten Daten, wie z.B. eine aus Radgeschwindigkeiten ermittelte Fahrzeuggeschwindigkeit, während der Aktivität von Fahrstabilitätsregelungssystemen möglicherweise nicht zuverlässig sind, würde eine Erhöhung der Vertrauensstufe in solchen Situationen eine falschen Eindruck von der Zuverlässigkeit der Korrekturkonstante vermitteln. Indem die Vertrauensstufe bei oder nur bei Vorliegen einer stabilen Geradeaus- oder Kurvenfahrt erhöht wird, dokumentiert diese das Vorliegen von für eine Bestimmung der Korrekturkonstanten geeigneten Fahrbedingungen. Eine stabile Fahrt impliziert hierbei auch, dass der Fahrer den Lenkwinkel nicht mit einer zu hohen Geschwindigkeit ändert.

Zweckmäßigerweise wird bei Beendigung eines Zündungslaufs der zuletzt bestimmte korrigierte Lenkwinkel in einem nichtflüchtigen Speicherbaustein gespeichert und bei Beginn eines nachfolgenden Zündungslaufs als Startwert ausgelesen. Wenn während einer Fahrt bzw. eines Zündungslaufs ein geeigneter Wert für die Korrekturkonstante ermittelt wurde, so kann unter Berücksichtigung des beim stehenden Fahrzeug gemessenen Lenkwinkel ein Startwert berechnet werden. Während des Parkens ändert sich der Lenkwinkel nicht, insbesondere wenn eine Lenkradsperre betätigt ist.

Es ist besonders zweckmäßig, wenn zu Beginn des nachfolgenden Zündungslaufs ein oder mehrere neue Datensätze ermittelt und die Abweichung zwischen bestimmter Korrekturkonstante oder bestimmten Korrekturkonstanten und dem Startwert berechnet wird, und die Vertrauensstufe auf einen vorgegebenen Wert inkrementiert wird, wenn die Abweichung zwischen bestimmter Korrekturkonstante oder bestimmten Korrekturkonstanten und dem Startwert einen achten Schwellwert unterschreitet. Indem zu Beginn der Fahrt bzw. des Zündungslaufs geprüft wird, ob der Startwert einer aus der Auswertung weniger Datensätze bestimmten Korrekturkonstante entspricht, kann auf diesen zurückgegriffen werden und die eine Vielzahl von Datensätzen erfordernde vollständige Bestimmung eines neuen Korrekturwerts unterbleiben.

Die Erfindung betrifft weiterhin ein Steuergerät zur Bestimmung eines Lenkwinkels eines Fahrzeugs, welches zumindest Informationen über einen Lenkwinkel, eine Gierrate und eine Fahrzeuggeschwindigkeit über eine geeignete Verbindung empfängt, insbesondere einen Fahrzeugdatenbus oder Mittel zur Interprozeßkommunikation, sowie einen Speicher, der mehrere zeitlich aufeinander folgender Datensätze aufnehmen kann, und mindestens einen Prozessor aufweist, der die Datensätze in einem Verfahren nach einem der Ansprüche 1 bis 10 auswertet. Das Steuergerät kann speziell zur Verarbeitung von Lenkwinkelinformationen ausgelegt sein oder weitere Funktionen bereitstellen. Hierbei kann "empfangen" auch bedeuten, dass das Steuergerät Mittel zur Messung oder Bestimmung der jeweiligen Größen umfasst.

Es ist vorteilhaft, wenn mindestens ein Gierratensensor in das Steuergerät integriert ist und das Steuergerät Mittel zum Empfang von Rohdaten eines Lenkradwinkelsensors umfasst. Somit können zumindest einige der benötigten Größen direkt im Steuergerät bestimmt werden. Viele Fahrzeugmodelle benötigen Informationen über eine Gierrate des Fahrzeugs; weiterhin bietet es sich an, die Rohdaten eines Lenkradwinkelsensors vollständig in einem Steuergerät zu verarbeiten, welches insbesondere über einen Fahrzeugdatenbus anderen Fahrzeugsystemen korrigierte Lenkwinkelinformationen bereitstellt.

Gemäß einer bevorzugten Ausführungsform der Erfindung umfasst das Steuergerät Mittel zur Ansteuerung von Radbremsen, insbesondere mindestens ein Hydraulikventil und mindestens eine elektrische Pumpe, und mindestens ein System zur Fahrstabilitätsregelung, insbesondere eine Antriebsschlupfregelung und/oder eine Fahrdynamikregelung. Somit kann ein einziges Steuergerät sowohl eine Lenkwinkeldatenverarbeitung als auch die Steuerung eines elektronischen Bremssystems mit einer Fahrstabilitätsregelung bereitstellen. Dies ermöglicht eine besonders effiziente Nutzung von Ressourcen wie z.B. vorhandener Rechenleistung, und außerdem einen besonders einfachen Datenaustausch.

Vorzugsweise werden Korrekturkonstante und/oder ein Maß möglicher Fehler der Korrekturkonstante über eine geeignete Verbindung, insbesondere einen Fahrzeugdatenbus oder Mittel zur Interprozeßkommunikation, an andere Systeme weitergegeben, insbesondere ein System zur Fahrstabilitätsregelung. Als Maß möglicher Fehler der Korrekturkonstante kann z.B. ein Vertrauensintervall dienen.

Zweckmäßigerweise werden Informationen zu einer oder mehrerer der folgenden Fahrtbedingungen, eine Geschwindigkeit des Fahrzeugs, eine Aktivität von Fahrstabilitätsregelungssystemen, eine Gierrate, eine Querbeschleunigung, eine zeitliche Änderung der Gierrate, eine longitudinale Fahrtrichtung, eine Neigung des Fahrzeugs, eine zeitliche Änderung des Lenkwinkels, über einen Fahrzeugdatenbus von einem weiteren Steuergerät empfangen, insbesondere einem Navigationssystem und/oder einem Sensorcluster. Von anderen Steuergeräten bereitgestellte Informationen über Fahrtbedingungen können auch zur Plausibilisierung verwendet werden.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 ein Fahrzeug mit einer Lenkwinkelbestimmungsvorrichtung,

Fig. 2 einen Ablaufplan des Verfahrens gemäß einem Ausführungsbeispiel der Erfindung,

Fig. 3 ein Diagramm der Differenzen zwischen gemessenem Lenkwinkel und berechnetem Lenkwinkel, die bei Durchführung eines erfindungsgemäßen Verfahrens auftreten können, und

Fig. 4 ein Schema zur Hierarchie der Vertrauensstufen.

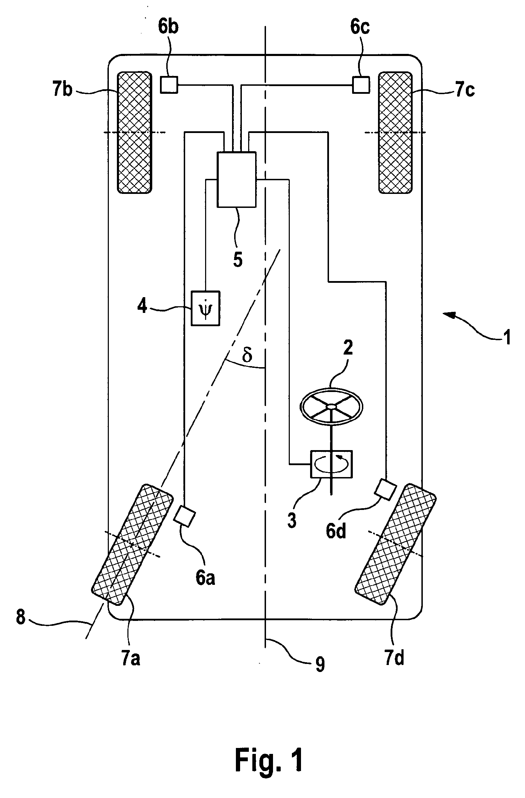

Figur 1 zeigt eine schematische Darstellung eines Fahrzeugs, welches mit einer Lenkwinkelbestimmungsvorrichtung ausgestattet ist. Fahrzeug 1 besitzt zwei Räder 7a, 7d, welche mit einem nicht gezeigten Lenkmechanismus verbunden sind, und zwei nicht gelenkte Räder 7b, 7c. Wird Lenkrad 2 um einen Winkel $\lambda$ aus der Mittelstellung ausgelenkt, so liegt die Laufrichtung 8 der gelenkten Räder unter einem Einschlagwinkel $\delta$ zur Längsachse 9 des Fahrzeugs. Lenkradwinkel $\lambda$ wird mit einem relativen Lenkradwinkelsensor 3 gemessen, der mit einem Steuergerät 5 verbunden ist. Raddrehzahlsensoren 6a-6d sowie Gierratensensor 4 sind ebenfalls mit Steuergerät 5 verbunden. Hierbei kann die Verbindung entweder über eine spezielle Leitung erfolgen, womit Steuergerät 5 dann auch eine Signalverarbeitung der Sensorsignale umfassen kann, oder die Informationen der Sensoren werden Steuergerät 5 über einen Datenbus zugeführt, wie z.B. einem CAN- oder FlexRay-Bus.

Anhand eines Fahrzeugmodells, wie z.B. dem bekannten Einspurmodell, wird aus der mit Gierratensensor 4 gemessenen Gierrate $\dot{\psi}$, der Fahrzeuggeschwindigkeit, konstanten Eigenschaften des Fahrzeugs und gegebenenfalls weiterer Größen der theoretische Einschlagwinkel $\delta_{theo}$ ermittelt und gemäß

$$\lambda_{theo} = K \cdot \delta_{theo}$$

in einen theoretischen Lenkwinkel $\lambda_{theo}$ umgerechnet; K bezeichnet die (konstante) Lenkübersetzung.

Mit den Raddrehzahlsensoren 6a-6d kann die Fahrzeuggeschwindigkeit nach bekannten Verfahren berechnet werden, es kann hierbei z.B. die Referenzgeschwindigkeit eines Bremsschlupfregelsystems verwendet werden. Falls die Gierrate $\dot{\psi}$ aus einer Betrachtung der Raddrehzahlen geschätzt wird, kann auf einen Gierratensensor 4 auch verzichtet werden. Es ist auch möglich, die Daten weiterer Sensoren, wie z.B. eines Beschleunigungssensors, bei der Berechnung des theoretischen Lenkwinkels $\lambda_{theo}$ zu berücksichtigen. Steuergerät 5 kann neben der Lenkwinkelbestimmung auch die Steuerung bzw. Regelung eines Bremssystems durchführen, wobei dann Fahrstabilitätsregelungen wie eine Bremsschlupfregelung oder eine Fahrdynamikregelung durchgeführt werden können, indem ein radindividueller Aufbau bzw. Abbau von Bremsmoment erfolgt.

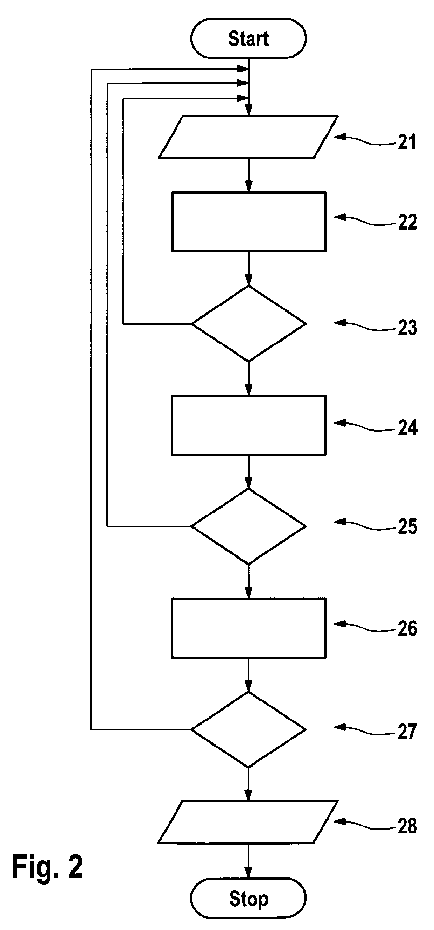

Figur 2 zeigt den Ablaufplan eines Verfahrens gemäß einem Ausführungsbeispiel der Erfindung. Element 21 symbolisiert die Übergabe von Informationen zu den Fahrtbedingungen an das Steuergerät. Diese können eine Fahrzeuggeschwindigkeit, eine Anzeige der Aktivität von Fahrstabilitätsregelungssystemen, die Gierrate, eine Gierbeschleunigung, eine longitudinalen Fahrtrichtung des Fahrzeugs (d. h. Vorwärts- oder Rückwärtsfahrt), eine Querbeschleunigung, eine Neigung des Fahrzeugs und Lenkradsensorinformationen umfassen.

In Schritt 22 wird aus der Gierrate ein theoretischer Lenkwinkel $\lambda_{theo}$ und aus den Daten des Lenkradwinkelsensors ein gemessener Lenkwinkel $\lambda_{mess}$ bestimmt. Anschließend wird die Differenz $\Delta$ zwischen gemessenem Lenkwinkel und theoretischem Lenkwinkel bestimmt:

$$\Delta = \lambda_{mess} - \lambda_{theo}$$

Weiterhin werden die Informationen gespeichert und ein Laufindex i erhöht.

In Schritt 23 wird geprüft, ob der Laufindex i einen vorgegebenen Wert N, beispielsweise 10 erreicht. Falls dies nicht der Fall ist, werden Gierrate und Lenkradwinkel erneut gemessen und Schritt 22 durchgeführt.

Wenn die Bedingung von Schritt 23 erfüllt ist, liegt somit ein Datensatz vor, der eine Anzahl N von Paaren aus theoretischem Lenkwinkel und gemessenem Lenkwinkel sowie der Differenz zwischen theoretischem und gemessenem Lenkwinkel umfasst. Daraufhin werden in Schritt 24 die Mittelwerte von gemessenem Lenkwinkel $\lambda_{mess}$, theoretischem Lenkwinkel $\lambda_{theo}$ und Differenz $\Delta$ für einen Datensatz berechnet:

$$\overline{\lambda}_{mess} = \frac{\sum\limits_{i=1}^{N} \lambda_{mess\,i}}{N}$$

$$\overline{\lambda}_{theo} = \frac{\sum\limits_{i=1}^{N} \lambda_{theo\,i}}{N}$$

$$\overline{\Delta} = \frac{\sum\limits_{i=1}^{N} \Delta_i}{N}$$

Weiterhin werden die Standardabweichungen, also die Wurzeln der mittleren Quadrate der Abweichungen einer Messung vom Mittelwert des Datensatzes ermittelt:

$$\sigma_{\lambda_M} = \frac{\sqrt{\sum\limits_{i=1}^{N} (\lambda_{mess\,i} - \overline{\lambda}_{mess})^2}}{N}$$

$$\sigma_{\lambda_{theo}} = \frac{\sqrt{\sum\limits_{i=1}^{N} (\lambda_{theo\,i} - \overline{\lambda}_{theo})^2}}{N}$$

$$\sigma_{\Delta} = \frac{\sqrt{\sum\limits_{i=1}^{N} (\Delta_i - \overline{\Delta})^2}}{N}$$

Anschließend wird der Korrelationsbeiwert $R_\lambda$ zwischen gemessenem Lenkwinkel und berechnetem Lenkwinkel bestimmt:

$$R_\lambda = \frac{\sum\limits_{i=1}^{N} ((\lambda_{theo\,i} - \overline{\lambda}_{theo}) \cdot (\lambda_{mess_i} - \overline{\lambda}_{mess}))}{\sigma_{\lambda_M} \cdot \sigma_{\lambda_{theor}}}$$

In Schritt 25 wird überprüft, ob der Korrelationsbeiwert $R_\lambda$ einen vorgegebenen Schwellwert $\varepsilon$ überschreitet:

$$R_\lambda > \varepsilon$$

Grundsätzlich muss der Korrelationsbeiwert in dem Intervall zwischen -1 und +1 liegen, wobei zwei unabhängige Größen im Rahmen der Mess- und Rechengenauigkeit einen Korrelationsbeiwert von 0 aufweisen. Wenn der Korrelationsbeiwert $R_\lambda$ einen vorgegebenen Schwellwert überschreitet, wird davon ausgegangen, dass $\overline{\Delta}$ eine geeignete Korrekturkonstante für die Korrektur eines gemessenen Lenkwinkels ist. Falls dies nicht der Fall ist, werden Gierrate und Lenkradwinkel erneut gemessen und die Berechnungen von Schritt 22 durchgeführt.

Ist die Bedingung hingegen erfüllt, so wird in Schritt 26 eine Abschätzung des möglichen Fehlers der Korrekturkonstante vorgenommen. Diese Abschätzung erfolgt gemäß der Formel

$$I = \mathrm{A} \cdot \sigma_\Delta + B,$$

wobei I das Vertrauensintervall des korrigierten Lenkwinkels, A eine von der Anzahl N abhängige Konstante und B einen von einer Vertrauensstufe M abhängigen Wert bezeichnet.

So kann B z.B. einem konstanten Maximalwert entsprechen, der um einen zur Vertrauensstufe proportionalen oder zumindest monoton steigenden Wert verringert wird. Auch ein zum Kehrwert $1/M$ der Vertrauensstufe proportionaler Fehler B kann für die Berechnung des Vertrauensintervalls I herangezogen werden.

Die Vertrauensstufe M wird vorzugsweise in Abhängigkeit von den Fahrtbedingungen ermittelt, so kann M z.B. um ein vorgegebenes Inkrement erhöht werden, wenn über einen vorgegebenen Zeitraum die Lenkradwinkelgeschwindigkeit einen vorgegebenen Schwellenwert unterschreitet und kein Fahrstabilitätsregelsystem aktiviert ist oder wurde.

Alternativ oder zusätzlich zu einer Betrachtung der Fahrtbedingungen kann die Vertrauensstufe M in Abhängigkeit davon modifiziert werden, ob das Vertrauensintervall I einen vorgegebenen Schwellwert S unterschreitet:

$$I < S$$

Wenn z.B. die Vertrauensstufe M einen Maximalwert von 16 aufweist, könnte sie um 1 erhöht werden sobald die Bedingung hinsichtlich des Vertrauensintervalls I erfüllt ist. Weiterhin kann diese Erhöhung auch davon abhängig gemacht werden, ob bestimmte Fahrtbedingungen vorliegen, wie z.B. eine stabile Geradeaus- oder Kurvenfahrt, bei der weder der Fahrer das Lenkrad mit einer Geschwindigkeit oberhalb eines Schwellwerts gedreht hat noch ein Fahrstabilitätsregelsystem aktiviert war.

In Schritt 27 wird überprüft, ob die Vertrauensstufe M einen vorgegebenen Beendigungsschwellwert überschreitet (bei einer maximalen Vertrauensstufe von 16 kann z.B. 12 ein geeigneter Beendigungsschwellwert sein).

Falls dies nicht der Fall ist, werden Gierrate und Lenkradwinkel erneut gemessen, bis ein neuer Datensatz erhalten und ausgewertet wurde. Wenn die Bedingung erfüllt ist, so wird in Schritt 28 die Korrekturkonstante gespeichert und es werden keine weiteren Datensätze ermittelt. Korrekturkonstante und Vertrauensintervall und/oder Vertrauensstufe werden von Fahrzeugregelungssystemen wie dem elektronischen Stabilitätsprogramm (ESC) verwendet, um korrigierte Lenkwinkel $\lambda_K = \lambda_{mess} - \overline{\Delta}$ zu erhalten und deren Genauigkeit zu beurteilen.

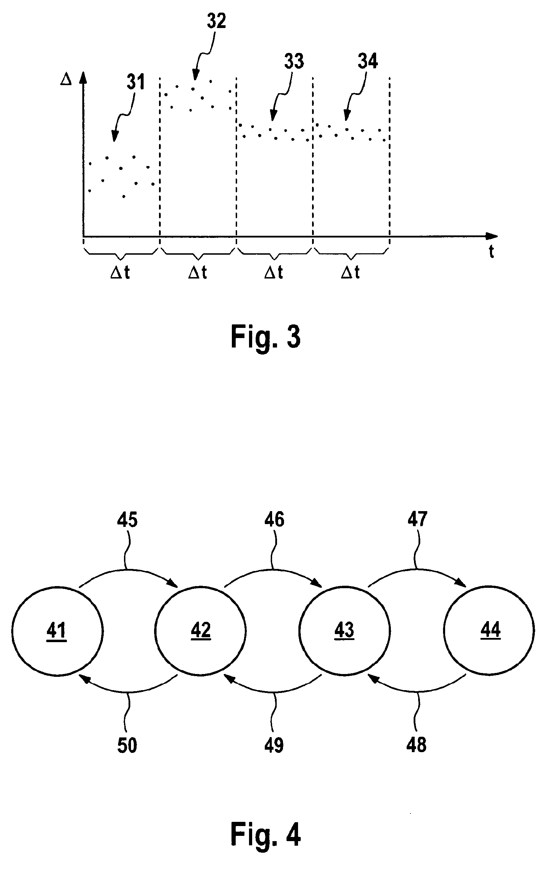

Fig. 3 zeigt ein Diagramm, bei dem die Differenz zwischen gemessenem Lenkwinkel und berechnetem Lenkwinkel für eine Anzahl von Datensätzen 31-34 dargestellt ist, wobei die Abszisse die Zeit angibt. Die Ermittlung eines Datensatzes erfolgt während eines Zeitraums $\Delta t$. Gemäß einem Ausführungsbeispiel der Erfindung wird die Streuung der Daten innerhalb eines Datensatzes sowie die Differenz der Mittelwerte aufeinander folgender Datensätze betrachtet. Liegt die Streuung der Daten oberhalb einer Schwelle, wie dies z.B. bei Datensatz 31 der Fall ist, so werden weitere Datensätze ermittelt. Weichen die Mittelwerte zweier aufeinander folgender Datensätze zu stark voneinander ab, wie dies z. B. bei den Datensätzen 32 und 33 der Fall ist, so wird ebenfalls die Ermittlung neuer Datensätze fortgesetzt. Erst wenn sowohl die Streuung innerhalb eines Datensatzes als auch die Differenz zwischen den Mittelwerten aufeinander folgender Datensätze je einen vorgegebenen Schwellwert unterschreiten, wie dies z.B. bei den Datensätzen 33 und 34 dargestellt ist, kann die Ermittlung neuer Datensätze beendet und die Korrekturkonstante gespeichert werden. Gemäß einer bevorzugten Ausführungsform der Erfindung ist ein Vergleich aufeinanderfolgender Datensätze eine notwendige und/oder eine hinreichende Bedingung für eine Erhöhung der Vertrauensstufe. In einer besonders bevorzugten Ausführungsform der Erfindung erfolgt eine Mittelwertbildung über die Korrekturkonstanten mehrerer aufeinanderfolgender Datensätze.

Fig. 4 zeigt ein Schema zur Hierarchie der Vertrauensstufen, wobei 41-44 die einzelnen Vertrauensstufen bezeichnen, 45-47 Bedingungen für die Erhöhung und 48-50 Bedingungen für die Verringerung einer Vertrauensstufe anzeigen. Zu Beginn einer Fahrt wird die Vertrauensstufe auf einen niedrigen Wert 41 gesetzt und ein Datensatz von Messwerten ermittelt und ausgewertet. Ist Bedingung 45 erfüllt, also z.B. das Vertrauensintervall unterhalb eines vorgegebenen Schwellwerts, so wird die Vertrauensstufe auf einen Wert 42 erhöht. Anschließend wird ein Datensatz von Messwerten ermittelt und ausgewertet und Bedingung 46 überprüft, die Bedingung 45 entsprechen kann oder z.B. zusätzlich das Vorliegen einer Geradeausfahrt fordert. Bei Erfüllung von Bedingung 46 wechselt die Vertrauensstufe auf den Wert 43. Wieder wird ein Datensatz von Messwerten ermittelt und ausgewertet. Wenn Bedingung 47 erfüllt ist, also z. B. die Abweichungen zwischen den zu den einzelnen Datensätzen bestimmten Korrekturkonstanten einen vorgegebenen Schwellwert unterschreiten, wird die Vertrauensstufe auf den Wert 44 gesetzt und das Verfahren beendet. Ergibt die Überprüfung einer Bedingung zur Erhöhung der Vertrauensstufe, dass diese nicht erfüllt ist, so wird zweckmäßigerweise die entsprechende Bedingung für eine Verringerung der Vertrauensstufe überprüft. Hierbei können die Bedingungen 48-50 entweder gleich oder je nach aktueller Vertrauensstufe verschieden sein. Beispielsweise könnte die Vertrauensstufe verringert werden, wenn die empirische Standardabweichung eines Datensatzes einen vorgegebenen Schwellwert übersteigt.

Gemäß einer weiteren bevorzugten Ausführungsform der Erfindung wird die Abweichung zwischen momentaner Differenz zwischen theoretischem Lenkwinkel und gemessenem Lenkwinkel mit dem Mittelwert der Differenz zwischen theoretischem Lenkwinkel und gemessenem Lenkwinkel über den aktuellen oder den vorherigen Datensatz berechnet. Eine Berechnung der Korrekturkonstante findet nur dann statt, wenn diese Abweichung einen Schwellwert unterschreitet:

$$\widetilde{\Delta}_i = \Delta_i - \overline{\Delta} < \varepsilon_1$$

Gemäß einer weiteren bevorzugten Ausführungsform der Erfindung wird die Standardabweichung der Differenz zwischen theoretischem Lenkwinkel und gemessenem Lenkwinkel des aktuellen Datensatzes berechnet. Eine Berechnung der Korrekturkonstante findet nur dann statt, wenn diese Differenz einen Schwellwert unterschreitet:

$$\sigma_{\Delta} < \varepsilon_2$$

Gemäß einer besonders bevorzugten Ausführungsform der Erfindung wird sowohl die Abweichung der momentanen Differenz zwischen theoretischem Lenkwinkel und gemessenem Lenkwinkel von dem Mittelwert der Differenz zwischen theoretischem Lenkwinkel und gemessenem Lenkwinkel des aktuellen oder letzten Datensatzes als auch die Standardabweichung der Differenz zwischen theoretischem Lenkwinkel und gemessenem Lenkwinkel des aktuellen Datensatzes berechnet. Eine Berechnung des Korrekturkonstante findet nur dann statt, wenn diese Abweichungen beide unterhalb eines jeweils vorgegebenen Schwellwerts liegen:

$$\widetilde{\Delta}_i < \varepsilon_1$$

$$\sigma_\Delta < \varepsilon_2$$

Gemäß einer weiteren bevorzugten Ausführungsform der Erfindung werden die Fahrtbedingungen, worunter Geschwindigkeit des Fahrzeugs und/oder Aktivität von Fahrzeugregelungssystemen und/oder Gierrate und/oder Querbeschleunigung und/oder zeitliche Änderung der Gierrate und/oder longitudinale Fahrtrichtung und/oder Neigung des Fahrzeugs zu verstehen sind, während der Ermittlung eines Datensatzes überwacht und einem Datensatz wird eine Vertrauensstufe M zugeordnet. Besonders zweckmäßig ist es, wenn eine gespeicherte Vertrauensstufe M in Abhängigkeit von der Änderung der Fahrtbedingungen während der Ermittlung dieses Datensatzes inkrementiert oder dekrementiert wird. Eine Berechnung des Korrekturwerts findet nur dann statt, wenn die Vertrauensstufe M einen vorgegebenen Schwellwert überschreitet.

Gemäß einer weiteren bevorzugten Ausführungsform der Erfindung werden die zeitlichen Änderungen der in einzelnen Datensätzen berechneten Mittelwerte für die zwischen theoretischem Lenkwinkel und gemessenem Lenkwinkel überwacht. Unterschreiten diese Änderungen einen vorgegebenen Schwellwert, so wird die Vertrauensstufe M erhöht:

$$\widetilde{\Delta}_i < \varepsilon_3$$

$$(\varepsilon_3 < \varepsilon_1)$$

Gemäß einer weiteren bevorzugten Ausführungsform der Erfindung wird die Standardabweichung der Differenz zwischen theoretischem Lenkwinkel und gemessenem Lenkwinkel über mehrere Datensätze betrachtet. Unterschreiten diese Änderungen einen vorgegebenen Schwellwert, so wird die Vertrauensstufe M erhöht:

$$\sigma_\Delta < \varepsilon_4$$

$$(\varepsilon_4 < \varepsilon_2)$$

Gemäß einer weiteren bevorzugten Ausführungsform der Erfindung wird die Vertrauensstufe weiter erhöht, wenn sowohl die Änderungen der in einzelnen Datensätzen berechneten Mittelwerte für die zwischen theoretischem Lenkwinkel und gemessenem Lenkwinkel als auch Standardabweichung der Differenz zwischen theoretischem Lenkwinkel und gemessenem Lenkwinkel über mehrere Datensätze jeweils vorgegebene Schwellwerte unterschreiten:

$$\widetilde{\Delta}_i < \varepsilon_3$$

$$(\varepsilon_3 < \varepsilon_1)$$

$$\sigma_\Delta < \varepsilon_4$$

$$(\varepsilon_4 < \varepsilon_2)$$

Gemäß einer weiteren bevorzugten Ausführungsform der Erfindung wird eine Abschätzung des möglichen Fehlers der Korrekturkonstante gemäß der Formel

$$I = \mathrm{A} \cdot \sigma_\Delta + B,$$

vorgenommen, wobei I das Vertrauensintervall des korrigierten Lenkwinkels, A eine von der Anzahl N abhängige Konstante und *B* einen von der Vertrauensstufe *M* abhängigen Wert bezeichnet. Wenn das Vertrauensintervall I einen vorgegebenen Schwellwert S unterschreitet,

$$I < S,$$

so werden Korrekturkonstante und Vertrauensintervall gespeichert und keine weiteren Datensätze ermittelt. Die gespeicherten Werte werden an Fahrstabilitätsregelungssysteme wie ESC übergeben und von diesen zur Berechnung des aktuellen Lenkwinkels und vorzugsweise einer Abschätzung des Fehlers verwendet:

$$\Delta_0 = \overline{\Delta}$$

$$I_0 = I$$

$$\lambda_i = \lambda_{M_i} - \Delta_0$$

Gemäß einer weiteren bevorzugten Ausführungsform der Erfindung wird am Ende einer Fahrt (bzw. eines Zündungslaufs) ein Startwert für die Korrekturkonstante ermittelt und über den aktuellen Fahrvorgang hinaus gespeichert. Bei Beginn einer neuen Fahrt wird der Startwert ausgelesen und als Korrekturkonstante verwendet. Zweckmäßigerweise werden neue Datensätze ermittelt und eine neue Korrekturkonstante sowie eine Vertrauensstufe berechnet. Wenn die Differenz zwischen Startwert und neu berechneter Korrekturkonstante eine vorgegebene Schwelle unterschreitet und die Vertrauensstufe eine weitere vorgegebene Schwelle überschreitet, wird der Startwert für die Dauer der Fahrt als Korrekturkonstante beibehalten und keine weiteren Datensätze ermittelt.

**Patentansprüche**

1. Verfahren, bei dem der Lenkwinkel eines Kraftfahrzeugs bestimmt wird, wobei über ein Fahrzeugmodell ein theoretischer Lenkwinkel berechnet und mit einem Lenkwinkelsensor ein gemessener Lenkwinkel bestimmt sowie die Differenz zwischen gemessenem und theoretischem Lenkwinkel ermittelt wird, wobei zumindest ein Datensatz umfassend eine Anzahl von aufeinanderfolgenden Messwerten erfasst und aus dem Mittelwert der Differenzen zwischen theoretischem und gemessenem Lenkwinkel eine Korrekturkonstante für den gemessenen Lenkwinkel bestimmt wird, **dadurch gekennzeichnet, dass** anhand der während der Erfassung des Datensatzes vorliegenden Fahrtbedingungen und einer Analyse des Datensatzes eine Vertrauensstufe berechnet wird, welche sich zwischen aufeinanderfolgenden Datensätzen inkrementell ändert, wobei in der Analyse des Datensatzes ein Korrelationskoeffizient zwischen theoretischem Lenkwinkel und gemessenem Lenkwinkel berechnet wird.

2. Verfahren nach Anspruch 1, **dadurch gekennzeichnet, dass** aus dem gemessenen Lenkwinkel und der Korrekturkonstante ein korrigierter Lenkwinkel bestimmt und an andere Fahrzeugsysteme, insbesondere ein System zur Fahrdynamikregelung, weitergegeben wird, wenn die Vertrauensstufe einen ersten Schwellwert überschreitet.

3. Verfahren nach Anspruch 1 oder 2, **dadurch gekennzeichnet, dass** die Ermittlung neuer Korrekturkonstanten für die Dauer eines Zündungslaufs beendet wird, wenn die Vertrauensstufe einen zweiten Schwellwert überschreitet.

4. Verfahren nach mindestens einem der vorhergehenden Ansprüche, **dadurch gekennzeichnet, dass** in einer Analyse des Datensatzes eine Standardabweichung der ermittelten Differenzen berechnet wird.

5. Verfahren nach Anspruch 4, **dadurch gekennzeichnet, dass** mögliche Fehler der Korrekturkonstanten durch ein Vertrauensintervall abgeschätzt werden, welches von der Standardabweichung der ermittelten Differenzen und vorzugsweise der Vertrauensstufe abhängt.

6. Verfahren nach Anspruch 4 oder 5, **dadurch gekennzeichnet, dass** aus einem Datensatz nur dann die Korrekturkonstante bestimmt wird, wenn das Vertrauensintervall einen Schwellwert unterschreitet und/oder der Korrelationskoeffizient einen Schwellwert überschreitet.

7. Verfahren nach mindestens einem der Ansprüche 4 bis 6, **dadurch gekennzeichnet, dass** die Vertrauensstufe dann oder nur dann erhöht wird, wenn das Vertrauensintervall einen Schwellwert unterschreitet und/oder der Korrelationskoeffizient einen Schwellwert überschreitet.

8. Verfahren nach mindestens einem der Ansprüche 4 bis 7, **dadurch gekennzeichnet, dass** mehrere Datensätze ermittelt und ausgewertet werden, und dass die Vertrauensstufe erhöht wird, wenn die Abweichungen zwischen den aus den einzelnen Datensätzen bestimmten Korrekturkonstanten und/oder berechneten Korrelationskoeffizienten und/oder zumindest von der Standardabweichung der ermittelten Differenzen abhängigen Vertrauensintervallen einen Schwellwert unterschreitet.

9. Verfahren nach mindestens einem der vorhergehenden Ansprüche, **dadurch gekennzeichnet, dass** Informationen zu einer oder mehrerer der folgenden Fahrtbedingungen, eine Geschwindigkeit des Fahrzeugs, eine Aktivität von Fahrstabilitätsregelungssystemen, eine Gierrate, eine Querbeschleunigung, eine zeitliche Änderung der Gierrate, eine longitudinale Fahrtrichtung, eine Neigung des Fahrzeugs, eine zeitliche Änderung des Lenkwinkels, für die Ermittlung der Vertrauensstufe ausgewertet werden.

10. Verfahren nach Anspruch 9, **dadurch gekennzeichnet, dass** die Vertrauensstufe dann oder nur dann erhöht wird, wenn die Fahrtbedingungen einer stabilen Geradeaus- oder Kurvenfahrt ohne Eingriffe von Fahrstabilitätsregelungssystemen entsprechen.

**11.** Verfahren nach mindestens einem der vorhergehenden Ansprüche, **dadurch gekennzeichnet, dass** bei Beendigung eines Zündungslaufs der zuletzt bestimmte korrigierte Lenkwinkel in einem nichtflüchtigen Speicherbaustein gespeichert und bei Beginn eines nachfolgenden Zündungslaufs als Startwert ausgelesen wird.

**12.** Verfahren nach Anspruch 11, **dadurch gekennzeichnet, dass** zu Beginn des nachfolgenden Zündungslaufs ein oder mehrere neue Datensätze ermittelt und die Abweichung zwischen bestimmter Korrekturkonstante oder bestimmten Korrekturkonstanten und dem Startwert berechnet wird, und dass die Vertrauensstufe auf einen vorgegebenen Wert inkrementiert wird, wenn die Abweichung zwischen bestimmter Korrekturkonstante und dem Startwert einen Schwellwert unterschreitet.

**13.** Steuergerät zur Bestimmung eines Lenkwinkels eines Fahrzeugs, welches zumindest Informationen über einen Lenkwinkel, eine Gierrate und eine Fahrzeuggeschwindigkeit über eine geeignete Verbindung empfängt, insbesondere einen Fahrzeugdatenbus oder Mittel zur Interprozeßkommunikation, **gekennzeichnet durch** einen Speicher, der mehrere zeitlich aufeinander folgender Datensätze aufnehmen kann, und mindestens einen Prozessor, der die Datensätze in einem Verfahren nach einem der Ansprüche 1 bis 12 auswertet.

**14.** Steuergerät nach Anspruch 13, **dadurch gekennzeichnet, dass** mindestens ein Gierratensensor in das Steuergerät integriert ist und das Steuergerät Mittel zum Empfang von Rohdaten eines Lenkradwinkelsensors umfasst.

**15.** Steuergerät nach einem der Ansprüche 13 oder 14, **dadurch gekennzeichnet, dass** das Steuergerät Mittel zur Ansteuerung von Radbremsen umfasst, insbesondere mindestens ein Hydraulikventil und mindestens eine elektrische Pumpe, und dass das Steuergerät mindestens ein System zur Fahrstabilitätsreglung umfasst, insbesondere eine Antriebsschlupfregelung und/oder eine Fahrdynamikregelung.

**16.** Steuergerät nach mindestens einem der Ansprüche 13 bis 15, **dadurch gekennzeichnet, dass** die Korrekturkonstante und/oder ein Maß möglicher Fehler der Korrekturkonstante über eine geeignete Verbindung, insbesondere einen Fahrzeugdatenbus oder Mittel zur Interprozeßkommunikation, an andere Fahrzeugsysteme weitergegeben werden, insbesondere ein System zur Fahrstabilitätsregelung.

**17.** Steuergerät nach mindestens einem der Ansprüche 13 bis 16, **dadurch gekennzeichnet, dass** Informationen zu einer oder mehrerer der folgenden Fahrtbedingungen, eine Geschwindigkeit des Fahrzeugs, eine Aktivität von Fahrstabilitätsregelungssystemen, eine Gierrate, eine Querbeschleunigung, eine zeitliche Änderung der Gierrate, eine longitudinale Fahrtrichtung, eine Neigung des Fahrzeugs, eine zeitliche Änderung des Lenkwinkels, über einen Fahrzeugdatenbus von einem weiteren Steuergerät empfangen werden, insbesondere einem Navigationssystem und/oder einem Sensorcluster.

**Claims**

**1.** Method in which the steering angle of a motor vehicle is determined, wherein a theoretical steering angle is calculated by means of a vehicle model and a measured steering angle is determined with a steering angle sensor, and the difference between the measured and theoretical steering angles is determined, wherein at least one data record comprising a number of successive measured values is acquired, and a correction constant for the measured steering angle is determined from the mean value of the differences between the theoretical steering angle and the measured steering angle, **characterized in that** a confidence level, which changes incrementally between successive data records, is calculated by means of travel conditions present during the acquisition of the data record and an analysis of the data record, wherein a correlation coefficient between the theoretical steering angle and the measured steering angle is calculated in the analysis of the data record.

**2.** Method according to Claim 1, **characterized in that** a corrected steering angle is determined from the measured steering angle and the correction constant and is passed on to other vehicle systems, in particular a system for vehicle dynamics control when the confidence level exceeds a first threshold value.

**3.** Method according to Claim 1 or 2, **characterized in that** the determination of new correction constants is ended for the duration of an ignition run if the confidence level exceeds a second threshold value.

**4.** Method according to at least one of the preceding claims, **characterized in that** a standard deviation of the determined differences is calculated in an analysis of the data record.

**5.** Method according to Claim 4, **characterized in that** possible errors of the correction constant are estimated by a confidence interval which depends on the standard deviation of the determined differences and preferably of the confidence level.

**6.** Method according to Claim 4 or 5, **characterized in that** the correction constant is determined from a data record only if the confidence interval undershoots a threshold value and/or the correlation coefficient exceeds a threshold value.

**7.** Method according to at least one of Claims 4 to 6, **characterized in that** the confidence level is increased if, or only if, the confidence interval undershoots a threshold value and/or the correlation coefficient exceeds a threshold value.

**8.** Method according to at least one of Claims 4 to 7, **characterized in that** a plurality of data records are determined and evaluated, and **in that** the confidence level is increased if deviations between the correction constants which are determined from the individual data records and/or calculated correlation coefficients and/or confidence intervals dependent at least on the standard deviation of the determined differences undershoot/undershoots a threshold value.

**9.** Method according to at least one of the preceding claims, **characterized in that** information relating to one or more of the following travel conditions: a speed of the vehicle, an activity of driving stability control systems, a yaw rate, a lateral acceleration, a change in the yaw rate over time, a longitudinal travel direction, an inclination of the vehicle, a change in the steering angle over time are evaluated for the determination of the confidence level.

**10.** Method according to Claim 9, **characterized in that** the confidence level is increased if, or only if, the travel conditions correspond to stable straight-ahead travel or cornering without interventions by driving stability control systems.

**11.** Method according to at least one of the preceding claims, **characterized in that** when an ignition run ends, the corrected steering angle determined last is stored in a nonvolatile memory module, and when a subsequent ignition run starts it is read out as a starting value.

**12.** Method according to Claim 11, **characterized in that** at the start of the subsequent ignition run one or more new data records are determined and the deviation between a certain correction constant or certain correction constants and the starting value is calculated, and **in that** the confidence level is incremented to a predefined value if the deviation between a certain correction constant and the starting value undershoots a threshold value.

**13.** Control unit for determining a steering angle of a vehicle which receives at least information about a steering angle, a yaw rate and a vehicle speed via a suitable connection, in particular a vehicle data bus or means for inter-process communication, **characterized by** a memory which can accommodate a plurality of chronologically successive data records, and at least one processor which evaluates the data records in a method according to one of Claims 1 to 12.

**14.** Control unit according to Claim 13, **characterized in that** at least one yaw rate sensor is integrated into the control unit, and the control unit comprises a means for receiving raw data of a steering wheel angle sensor.

**15.** Control unit according to one of Claims 13 and 14, **characterized in that** the control unit comprises means for actuating wheel brakes, in particular at least one hydraulic valve and at least one electric pump, and **in that** the control unit comprises at least one system for driving stability control, in particular a traction control and/or a vehicle dynamics control.

**16.** Control unit according to at least one of Claims 13 to 15, **characterized in that** the correction constant and/or a measure of possible errors in the correction constant are/is passed on via a suitable connection, in particular a vehicle data bus or means for inter-process communication, to other vehicle systems, in particular to a system for driving stability control.

**17.** Control unit according to at least one of Claims 13 to 16, **characterized in that** information relating to one or more of the following travel conditions, a speed of the vehicle, an activity of driving stability control systems, a yaw rate, a lateral acceleration, a change in the yaw rate over time, a longitudinal direction of travel, an inclination of the vehicle, a change in the steering angle over time, are received from a further control unit, in particular a navigation system and/or a sensor cluster, via a vehicle data bus.

## Revendications

**1.** Procédé avec lequel est défini l'angle de braquage d'un véhicule automobile, un angle de braquage théorique étant calculé par le biais d'un modèle de véhicule et un angle de braquage mesuré étant défini avec un capteur d'angle de braquage, puis la différence entre les angles de braquage théorique et mesuré étant déterminée, au moins un jeu de données comprenant une pluralité de valeurs mesurées successives étant collecté et une constante de correction pour l'angle de braquage mesuré étant définie à partir de la valeur moyenne des différences entre les angles de braquage théorique et mesuré, **carac-**

**térisé en ce qu'**un niveau de confiance, lequel varie de manière incrémentale entre les jeux de données successifs, est calculé à l'aide des conditions de conduite en présence pendant la collecte du jeu de données et d'une analyse du jeu de données, un coefficient de corrélation entre l'angle de braquage théorique et l'angle de braquage mesuré étant calculé dans l'analyse du jeu de données.

2. Procédé selon la revendication 1, **caractérisé en ce qu'**un angle de braquage corrigé est défini à partir de l'angle de braquage mesuré et de la constante de correction, puis retransmis à d'autres systèmes du véhicule, par exemple un système de régulation de la dynamique de conduite, lorsque le niveau de confiance dépasse une première valeur de seuil.

3. Procédé selon la revendication 1 ou 2, **caractérisé en ce que** la détermination de nouvelles constantes de correction est arrêtée pendant la durée d'une course d'allumage lorsque le niveau de confiance dépasse une deuxième valeur de seuil.

4. Procédé selon au moins l'une des revendications précédentes, **caractérisé en ce qu'**un écart-type des différences déterminées est calculé dans une analyse du jeu de données.

5. Procédé selon la revendication 4, **caractérisé en ce que** les erreurs possibles des constantes de correction sont estimées par un intervalle de confiance qui dépend de l'écart-type des différences déterminées et de préférence du niveau de confiance.

6. Procédé selon la revendication 4 ou 5, **caractérisé en ce que** la constante de correction n'est définie à partir d'un jeu de données que lorsque l'intervalle de confiance devient inférieur à une valeur de seuil et/ou le coefficient de corrélation devient supérieur à une valeur de seuil.

7. Procédé selon au moins l'une des revendications 4 à 6, **caractérisé en ce que** le niveau de confiance est augmenté ou seulement augmenté lorsque l'intervalle de confiance devient inférieur à une valeur de seuil et/ou le coefficient de corrélation devient supérieur à une valeur de seuil.

8. Procédé selon au moins l'une des revendications 4 à 7, **caractérisé en ce que** plusieurs jeux de données sont déterminés et interprétés, et **en ce que** le niveau de confiance est augmenté lorsque les écarts entre les constantes de correction définies à partir des jeux de données individuels et/ou les coefficients de corrélation calculés et/ou les intervalles de confiance dépendant au moins de l'écart-type des différences déterminées deviennent inférieurs à une valeur de seuil.

9. Procédé selon au moins l'une des revendications précédentes, **caractérisé en ce que** des informations relatives à une ou plusieurs des conditions de conduite suivantes, une vitesse du véhicule, une activité des systèmes de régulation de la stabilité de conduite, un taux de lacet, une accélération transversale, une modification dans le temps du taux de lacet, un sens de conduite longitudinal, une inclinaison du véhicule, une modification dans le temps de l'angle de braquage, sont interprétées pour la détermination du niveau de confiance.

10. Procédé selon la revendication 9, **caractérisé en ce que** le niveau de confiance est augmenté ou seulement augmenté lorsque les conditions de conduite correspondent à une conduite stable en ligne droite ou en virage sans intervention des systèmes de régulation de la stabilité de conduite.

11. Procédé selon au moins l'une des revendications précédentes, **caractérisé en ce qu'**à la fin d'une course d'allumage, le dernier angle de braquage corrigé défini est mis en mémoire dans un composant de mémorisation non volatile et lu en tant que valeur de départ au début d'une course d'allumage suivante.

12. Procédé selon la revendication 11, **caractérisé en ce qu'**au début de la course d'allumage suivante, un ou plusieurs nouveaux jeux de données sont déterminés et l'écart entre une certaine constante de correction ou certaines constantes de correction et la valeur de départ est calculé, et **en ce que** le niveau de confiance est incrémenté à une valeur prédéfinie lorsque l'écart entre une certaine constante de correction et la valeur de départ devient inférieur à une valeur de seuil.

13. Contrôleur destiné à définir un angle de braquage d'un véhicule automobile, lequel reçoit au moins des informations sur un angle de braquage, un taux de lacet et une vitesse du véhicule par le biais d'une liaison appropriée, notamment un bus de données de véhicule ou des moyens de communication interprocessus, **caractérisé par** une mémoire qui peut enregistrer plusieurs jeux de données successifs dans le temps, et au moins un processeur qui interprète les jeux de données dans un procédé selon l'une des revendications 1 à 12.

14. Contrôleur selon la revendication 13, **caractérisé en ce qu'**au moins un capteur de taux de lacet est intégré dans le contrôleur et le contrôleur comprend des moyens pour recevoir les données brutes d'un capteur d'angle de volant de direction.

15. Contrôleur selon l'une des revendications 13 ou 14, **caractérisé en ce que** le contrôleur comprend des moyens pour commander des freins de roue, notamment au moins une vanne hydraulique et au moins une pompe électrique, et **en ce que** le contrôleur comprend au moins un système de régulation de la stabilité de conduite, notamment une régulation du patinage d'entraînement et/ou une régulation de la dynamique de conduite.

16. Contrôleur selon au moins l'une des revendications 13 à 15, **caractérisé en ce que** la constante de correction et/ou une grandeur de l'erreur possible de la constante de correction sont retransmises par le biais d'une liaison appropriée, notamment un bus de données de véhicule ou des moyens de communication interprocessus à d'autres systèmes du véhicule, notamment un système de régulation de la stabilité de conduite.

17. Contrôleur selon au moins l'une des revendications 13 à 16, **caractérisé en ce que** des informations relatives à une ou plusieurs des conditions de conduite suivantes, une vitesse du véhicule, une activité des systèmes de régulation de la stabilité de conduite, un taux de lacet, une accélération transversale, une modification dans le temps du taux de lacet, un sens de conduite longitudinal, une inclinaison du véhicule, une modification dans le temps de l'angle de braquage, sont reçues par un contrôleur supplémentaire, notamment un système de navigation et/ou une grappe de capteurs, par le biais d'un bus de données de véhicule.

**Fig. 1**

**Fig. 2**

**Fig. 3**

**Fig. 4**

**IN DER BESCHREIBUNG AUFGEFÜHRTE DOKUMENTE**

**In der Beschreibung aufgeführte Patentdokumente**

- DE 69714806 T2
- US 5790966 A
- WO 200711332 A
- DE 102008063567 A1

**In der Beschreibung aufgeführte Nicht-Patentliteratur**

- **M. MITSCHKE.** Dynamik der Kraftfahrzeuge, Band C Fahrverhalten. Springer, 1990